# EUROPEAN PATENT APPLICATION

(11) **EP 4 848 072 A1**
(43) Date of publication of application: **02.12.2026**
(21) Application number: 25179948.2
(22) Date of filing: 30.05.2025
(51) Int. Cl.: G06F 8/35, G05B 19/042, G06F 30/20

(54) **METHOD AND SYSTEM FOR AUTOMATED GENERATION AND DEPLOYMENT OF HARDWARE CONFIGURATION FILES**

(71) Applicant: Siemens Aktiengesellschaft, 80333 München (DE)
(72) Inventor: Bhende, Manthan, 442104 dist. Wardha, Maharashtra (IN); Kolanda, Bharath Kumar, 560100 Bangalore (IN); Kumar, Vivek, 226301 Lucknow, Uttar Pradesh (IN)
(74) Representative: Isarpatent

(57) **Abstract**

A system and method are disclosed for the automated generation and deployment of hardware configuration files based on user-specified natural language prompts. A user interface module (302) receives a natural language prompt specifying a hardware configuration intent from a user. A natural language processing and embedding model (304) generates a embedding vector representing the prompt, which is processed by a processor (202) to select a relevant configuration context set from a vector database (310) containing embedding vectors of historical hardware configuration files stored in a historical hardware configuration store (118). A consolidated context bundle, including the prompt and the relevant configuration context set, is transmitted to a large language model (308) to generate a candidate hardware configuration file. The system then controls the deployment of the candidate hardware configuration file to at least one industrial controller (108A-N), thereby physically altering the operation of the industrial controller(s) in accordance with the generated configuration.

## Description

The present disclosure relates to a field of industrial automation programming and more particularly relates to a method and system of automated generation and deployment of hardware configuration files.

A production facility such as a beverage bottling plant typically includes numerous programmable logic controllers, motors, pumps, valves, and sensors that must be parameterized and coordinated through a single hardware configuration file stored in each controller memory.

The hardware configuration file contains machine-readable directives, network maps, security roles, and device metadata; its correctness directly determines whether actuators open on time, conveyors run at the right speed, and safety interlocks engage when required.

To create such a file manually, a configuration engineer must gather hundreds of parameters-controller memory limits, field-bus addresses, physical wiring schemes, and domain-specific process rules-then translate them into vendor-specific code or XML schemas.

Traditional engineering suites offer drag-and-drop blocks, yet they still require expert knowledge of ladder logic or IEC-61131 syntax, leaving non-technical staff unable to commission or update equipment without specialist intervention.

When a single line is edited in a large project, existing tools seldom flag which downstream safety settings, throughput targets, or digital twin KPIs are impacted, forcing engineers to pore over thousands of lines to locate hidden dependencies.

Likewise, conventional systems provide limited automated guidance for optimization, error detection, or impact analysis, so teams spend excessive time debugging configurations that later fail during field trials or cause costly plant downtime.

As modern plants scale, maintaining ever-growing libraries of device classes, user roles, and security policies has become practically impossible without automated assistance tied to historical best practice and continuous simulation feedback.

Thus, it an object of the present disclosure to provide a method and system for automated generation and deployment of hardware configuration files.

The object of the present disclosure is achieved by a method of automated generation and deployment of a hardware configuration file. The method comprises receiving at a user interface module a natural language prompt specifying a hardware configuration intent from a user. The method further comprises applying a tokenization and a sentence parsing to the natural language prompt before generating the embedding vector.

The method further comprises submitting the natural language prompt to an embedding model after the tokenization and the sentence parsing. The method further comprises generating using the embedding model the embedding vector representing the natural language prompt. The method further comprises determining an adaptive similarity threshold for selection of a relevant configuration context set based on detected variability of the natural language prompt.

The method further comprises adjusting the similarity search parameters in accordance with the adaptive similarity threshold. The method further comprises selecting using a processor a relevant configuration context set from a vector database by applying a similarity search between the embedding vector and a plurality of embedding vectors corresponding to a plurality of historical hardware configuration files. The method further comprises controlling execution of a large language model by transmitting a consolidated context bundle comprising the natural language prompt and the relevant configuration context set to the large language model and generating a candidate hardware configuration file.

The method further comprises determining validity of the candidate hardware configuration file by applying a schema validation and the logic consistency checks. The method further comprises outputting a validity status information based on results of the schema validation and the logic consistency checks. The method further comprises applying an access protection level to the candidate hardware configuration file by generating security directives controlling modification rights.

The method further comprises updating the candidate hardware configuration file with the security directives. The method further comprises controlling execution of a simulation environment by transmitting the candidate hardware configuration file to a digital twin of at least one industrial controller. The method further comprises detecting operational errors by virtualized execution.

The method further comprises modifying the candidate hardware configuration file in response to a detected operational error. The method further comprises synchronizing the simulation progress indicators between the simulation environment and the user interface module to display real-time validation status. The method further comprises outputting a synchronized validation status to the user interface module.

The method further comprises displaying a simulation report and guidance messages referencing the relevant configuration context set to a user on the user interface module. The method further comprises receiving a user feedback in response to the simulation report. The method further comprises controlling a deployment of the candidate hardware configuration file to at least one industrial controller thereby physically altering operation of the at least one industrial controller in accordance with the candidate hardware configuration file.

The method further comprises receiving a deployment status from the at least one industrial controller. The method further comprises if a failure is detected transmitting a failure context to the processor to control execution of the large language model with an updated consolidated context bundle for iterative refinement of the candidate hardware configuration file. The method further comprises transmitting the candidate hardware configuration file to a historical hardware configuration store after deployment.

The method further comprises generating a new embedding vector for the candidate hardware configuration file thereby augmenting contextual data within the vector database for future similarity searches.

The object of the present disclosure is further achieved by a system of automated generation and deployment of a hardware configuration file. The system comprises the user interface module configured to receive the natural language prompt specifying the hardware configuration intent from a user. The system further comprises a natural language processing module configured to apply the tokenization and the sentence parsing to the natural language prompt before the embedding model generates the embedding vector.

The natural language processing module further comprises a sequencing mechanism configured to deliver the tokenized and parsed prompt to the embedding model. The system further comprises the embedding model configured to generate the embedding vector representing the natural language prompt. The system further comprises a threshold manager configured to determine the adaptive similarity threshold for selection of the relevant configuration context set based on detected variability of the natural language prompt.

The threshold manager further comprises a parameter adjuster operative to adjust the similarity search parameters according to the adaptive similarity threshold. The system further comprises the processor configured to select the relevant configuration context set from the vector database by applying the similarity search between the embedding vector and a plurality of embedding vectors corresponding to a plurality of historical hardware configuration files. The system further comprises a large language model engine configured to receive the consolidated context bundle comprising the natural language prompt and the relevant configuration context set and generate the candidate hardware configuration file.

The system further comprises a validation engine configured to determine validity of the candidate hardware configuration file by applying the schema validation and the logic consistency checks. The validation engine further comprises the output device configured to provide the validity status based on the validation engine's results. The system further comprises a security directive generator configured to apply the access protection level to the candidate hardware configuration file by generating the security directives controlling modification rights.

The security directive generator further comprises an update module to embed the security directives in the candidate hardware configuration file. The system further comprises the simulation environment configured to receive the candidate hardware configuration file. The simulation environment further comprises logic to detect operational errors by simulating execution on the digital twin of at least one industrial controller.

The simulation environment further comprises logic to output an updated hardware configuration file in response to the operational error. The system further comprises a synchronization controller configured to synchronize the simulation progress indicators between the simulation environment and the user interface module to display real-time validation status. The synchronization controller further comprises the output device configured to provide the synchronized validation status to the user interface module.

The system further comprises a display module configured to display the simulation report and the guidance messages referencing the relevant configuration context set to a user. The display module further comprises a feedback interface configured to receive the user feedback in response to the displayed simulation report. The system further comprises a hardware programming interface configured to deploy the candidate hardware configuration file to at least one industrial controller thereby physically altering operation of the at least one industrial controller in accordance with the candidate hardware configuration file.

The system further comprises a feedback loop module configured to receive the deployment status from at least one industrial controller. The feedback loop module further comprises logic to transmit the failure context to the processor for iterative refinement of the candidate hardware configuration file via the large language model engine in response to failure detection. The system further comprises the historical hardware configuration store configured to receive the candidate hardware configuration file after deployment.

The historical hardware configuration store further comprises an vector database module configured to generate the new embedding vector for the candidate hardware configuration file and update the vector database.

The above-mentioned and other features of the disclosure will now be addressed with reference to the accompanying drawings of the present disclosure. The illustrated embodiments are intended to illustrate, but not limit the disclosure.The present disclosure is further described hereinafter with reference to illustrated embodiments shown in the accompanying drawings, in which:

### Brief description of figures:

FIG 1 is a block diagram of an industrial automation environment 100 capable of generating and deploying hardware configuration files, according to an embodiment of the present disclosure;
FIG 2 is a block diagram of a configuration generation system, such as those shown in FIG. 1, in which an embodiment of the present disclosure can be implemented;
FIG 3 is a block diagram of an automation module, such as those shown in FIG. 2, in which an embodiment of the present disclosure can be implemented; and
FIG 4A-B is a process flowchart illustrating an exemplary method of automated generation and deployment of a hardware configuration file, according to an embodiment of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

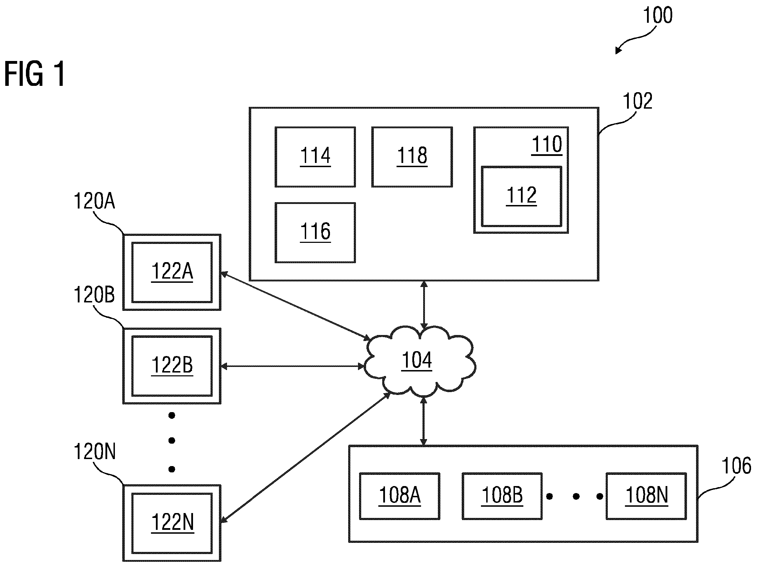

FIG 1 is a block diagram of an industrial automation environment 100 capable of generating hardware configuration files, according to an embodiment of the present disclosure.

In FIG 1, the industrial automation environment 100 includes a configuration generation system 102, a technical installation 106 and one or more client devices 120A-N. As used herein, "industrial automation environment" refers to a processing environment comprising configurable computing physical and logical resources, for example, networks, servers, storage, applications, services, etc., and data distributed over a platform, such as a cloud computing platform.

The industrial automation environment 100 provides on-demand network access to a shared pool of the configurable computing physical and logical resources.

The configuration generation system 102 is communicatively connected to the technical installation 106 via the network 104 (such as Local Area Network (LAN), Wide Area Network (WAN), Wi-Fi, Internet, any short-range or wide-range communication).

The configuration generation system 102 is also connected to the one or more client devices 120A-N via the network 104. The configuration generation system 102 is connected to one or more industrial controllers 108A-N in the technical installation 106 via the network 104.

The one or more industrial controllers 108A-N may include servers, robots, switches, automation devices, programmable logic controllers (PLCs), human-machine interfaces (HMIs), motors, valves, pumps, actuators, sensors and other industrial equipment(s).

The one or more industrial controllers 108A-N may be connected to each other or several other components (not shown in FIG 1) via physical connections.

The physical connections may be through wiring between the one or more industrial controllers 108A-N.

Alternatively, the one or more industrial controllers 108A-N may also be connected via non-physical connections (such as Internet of Things (IoT)) and 5G networks.

Although FIG 1 illustrates the configuration generation system 102 connected to one technical installation 106, one skilled in the art can envision that the configuration generation system 102 can be connected to several technical installations 106 located at different geographical locations via the network 104. The client devices 120A-N may be a desktop computer, laptop computer, tablet, smart phone and the like.

Each of the client devices 120A-N is provided with a configuration authoring tool 122A-N for generating and/or editing hardware configuration files respectively.

The client devices 120A-N can access the configuration generation system 102 for automatically generating hardware configuration files.

The client devices 120A-N can access cloud applications (such as providing performance visualization of the one or more industrial controllers 108A-N via a web browser).

Throughout the specification, the terms "client device" and "user device" are used interchangeably. The configuration generation system 102 may be a standalone server deployed at a control station or may be a remote server on a cloud computing platform.

In a non-claimed embodiment, the configuration generation system 102 may be a cloud-based configuration generation system.

The configuration generation system 102 is capable of delivering applications (such as cloud applications) for managing a technical installation 106 comprising one or more industrial controllers 108A-N.

The configuration generation system 102 may comprise a platform 110 (such as a cloud computing platform), an automation module 112, a server 114 including hardware resources and an operating system (OS), a network interface 116 and a historical hardware configuration store 118.

In one example, the platform 110 orchestrates microservices via a Kubernetes cluster scaled to three worker nodes connected through a 10 GbE backbone. In yet another example, service discovery on the platform 110 is achieved through an internal DNS subsystem that resolves module names to pod IP addresses within 100 milliseconds. In one example, an agent on the platform 110 exports CPU and memory utilisation metrics that feed into the feedback loop described for the network interface 116.

The network interface 116 enables communication between the configuration generation system 102, the technical installation 106, and the client device(s) 120A-N.

The interface (such as a cloud interface) (not shown in FIG 1) may allow the engineers at the one or more client device(s) 120A-N to access configuration project files stored at the configuration generation system 102 and perform one or more actions on the configuration project files as the same instance.

The server 114 may include one or more servers on which the OS is installed.

The servers 114 may comprise one or more processors, one or more storage devices, such as memory units, for storing data and machine-readable instructions for example, applications and application programming interfaces (APIs), and other peripherals required for providing computing (such as cloud computing) functionality.

The platform 110 enables functionalities such as data reception, data processing, data rendering, data communication, etc. using the hardware resources and the OS of the servers 114 and delivers the aforementioned services using the application programming interfaces deployed therein.

The platform 110 may comprise a combination of dedicated hardware and software built on top of the hardware and the OS.

In a non-claimed embodiment, the platform 110 may correspond to a configuration development environment comprising prompt editors and compilers which allow the users of the client devices 120A-N to generate hardware configuration files.

The platform 110 may further comprise the automation module 112 configured for generating hardware configuration files.

In one example, the automation module 112 is packaged as an Open Container Initiative compliant image no larger than 200 MB to permit over-the-air updates through the network 104. In yet another example, the automation module 112 exposes a gRPC interface secured by mutual TLS so that external supervisory systems can trigger batch configuration generation jobs. In one example, the automation module 112 maintains an internal audit log with millisecond-accurate timestamps for every modification applied to a set of controller blocks.

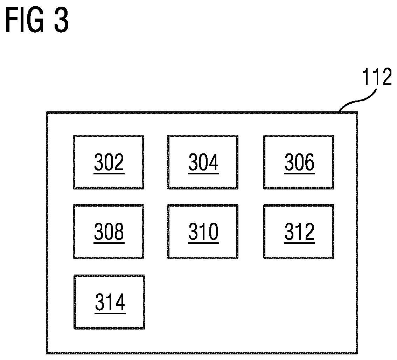

Details of the automation module 112 are explained in FIG 3.

The historical hardware configuration store 118 stores the information relating to the technical installation 106 and the client device(s) 120A-N.

In one example, the historical hardware configuration store 118 is implemented using a column-oriented data engine that compresses numerical sensor arrays at an average ratio of 8:1. In yet another example, time-series partitions inside the historical hardware configuration store 118 are rotated every 24 hours to keep query latencies below 50 milliseconds. In one example, role-based access control policies enforced at the historical hardware configuration store 118 prevent write operations from any service other than the automation module 112.

The historical hardware configuration store 118 is, for example, a structured query language (SQL) data store or a not only SQL (NoSQL) data store.

In an exemplary non-claimed embodiment, the historical hardware configuration store 118 may be configured as a cloud-based database implemented in the industrial automation environment 100, where computing resources are delivered as a service over the platform 110.

The historical hardware configuration store 118, according to another non-claimed embodiment of the present disclosure, is a location on a file system directly accessible by the automation module 112.

The historical hardware configuration store 118 is configured to store configuration project files, hardware configuration files, embedding vectors, parameter values associated with the one or more industrial controllers 108A-N, test results, simulation results, status messages, one or more simulation instances, graphical representations, logic patterns, industrial controllers 108A-N and controller properties, one or more controller blocks, relationship information between the controllers, requirements, update messages and the like.

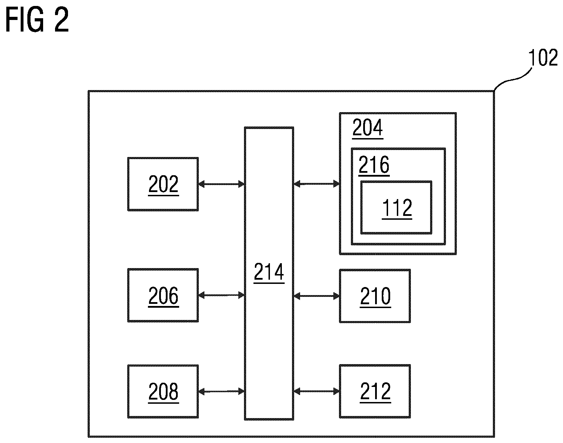

FIG 2 is a block diagram of the configuration generation system 102, such as those shown in FIG 1, in which an embodiment of the present disclosure can be implemented.

In FIG 2, the configuration generation system 102 includes a processor(s) 202, an accessible memory 204, a storage unit 206, a communication interface 208, a display module and feedback interface 210, a network interface and feedback loop module 212 and a bus 214.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit.

In one example, the processor(s) 202 are implemented as a quad-core 64-bit system-on-chip operating at 1.6 GHz with integrated hardware accelerators for AES encryption and CRC32 checksum generation. In yet another example, the processor(s) 202 interface with a dedicated neural co-processor over PCI Express Gen3 x4 to offload embedding calculations exceeding ten tera-operations per second. In one example, heat is dissipated via a passive aluminium heatsink rated for a 25 W thermal design power, ensuring compliance with plant-floor temperature constraints.

The processor(s) 202 may also include embedded controllers, such as generic or programmable logic devices or arrays, application-specific integrated circuits, single-chip computers, and the like.

The memory 204 may be non-transitory volatile memory and nonvolatile memory.

In one example, the memory 204 comprises 8 GB of DDR4 error-correcting code modules operating at 2666 MT/s to safeguard against transient bit flips. In yet another example, a 256 MB NOR flash segment inside the memory 204 stores a secure bootloader and immutable copies of the threshold manager 306 algorithms. In one example, wear-levelling firmware inside the memory 204 extends the write endurance to above one hundred thousand program/erase cycles, meeting industrial reliability standards.

The memory 204 may be coupled for communication with the processor(s) 202, such as being a computer-readable storage medium.

The processor(s) 202 may execute machine-readable instructions and/or source code stored in the memory 204.

A variety of machine-readable instructions may be stored in and accessed from the memory 204.

The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 204 includes a configuration development environment (CDE) 216.

The CDE 216 includes the automation module 112 stored in the form of machine-readable instructions on any of the above-mentioned storage media and may be in communication with and executed by the processor(s) 202.

The storage unit 206 may be a non-transitory storage medium configured for storing a database (such as historical hardware configuration store 118) which comprises server versions of a plurality of controller blocks associated with a set of industrial domains.

In one example, the storage unit 206 is a 1 TB NVMe solid-state drive partitioned into a primary ext4 volume for system binaries and a secondary XFS volume for vector indices. In yet another example, the storage unit 206 employs power-loss protection capacitors so that no data corruption occurs during unexpected line drops. In one example, SMART telemetry from the storage unit 206 is polled every hour by the processor 202 and archived into the historical hardware configuration store 118 for predictive maintenance.

The communication interface 208 is configured for establishing communication sessions between the one or more client devices 120A-N and the configuration generation system 102.

In one example, the communication interface 208 utilises dual redundant Ethernet ports configured for rapid spanning tree protocol to guarantee sub-50-millisecond failover. In yet another example, the communication interface 208 supports Transport Layer Security version 1.3 with mutual authentication certificates provisioned from a plant key management server. In one example, a bandwidth-shaping daemon inside the communication interface 208 enforces a ceiling of 50 Mbps for non-critical telemetry so that configuration file transfers receive deterministic throughput.

The communication interface 208 allows the one or more configuration applications running on the client devices 120A-N to import/export configuration project files into the configuration generation system 102.

In a non-claimed embodiment, the communication interface 208 interacts with the interface at the one or more client devices 120A-N for allowing the engineers to access the hardware configuration files associated with a configuration project file and perform one or more actions on the hardware configuration files stored in the configuration generation system 102.

The display module and feedback interface 210 may include input devices such as a keypad, touch-sensitive display, camera (such as a camera receiving gesture-based inputs), etc. capable of receiving one or more input signals, such as user commands to process configuration project files.

In one example, the display module and feedback interface 210 drives a 1920 × 1080 capacitive touch panel protected by chemically tempered glass suitable for wash-down environments. In yet another example, gesture inputs captured at 60 frames per second are fed to a convolutional pose-estimation network that recognises operator hand signals amidst glare conditions. In one example, a haptic buzzer integrated into the display module and feedback interface 210 provides tactile confirmation when a configuration file passes simulation validation.

Also, the display module and feedback interface 210 may be a display unit for displaying a graphical user interface which visualizes the simulation status associated with the modified hardware configuration files and also displays the status information associated with each set of actions performed on the graphical user interface.

The set of actions may include execution of predefined tests, download, compile and deploy of configuration files.

The bus 214 acts as interconnect between the processor 202, the memory 204, and the display module and feedback interface 210.

In one example, the bus 214 is implemented as a 128-bit AXI fabric clocked at 400 MHz, delivering a peak throughput of 51.2 GB/s between the processor 202 and the memory 204. In yet another example, priority arbitration on the bus 214 ensures that simulation traffic from the validation engine 312 pre-empts background logging to avoid deadline overruns. In one example, differential signalling and on-board termination are employed along the bus 214 traces to maintain signal integrity across temperature excursions from -20 °C to 60 °C.

The network interface and feedback loop module 212 may be configured to handle network connectivity, bandwidth and network traffic between the configuration generation system 102, client devices 120A-N and the technical installation 106.

In one example, the network interface and feedback loop module 212 actively pings each industrial controller 108A-N every five seconds to measure round-trip latency, storing the metrics as part of the adaptive similarity threshold calculation. In yet another example, a message-brokering submodule within the network interface and feedback loop module 212 uses the MQTT protocol to disseminate simulation failure events to subscribed client devices in real time. In one example, a proportional-integral controller adjusts search weightings inside the vector database module 310 based on live telemetry received through the network interface and feedback loop module 212.

Those of ordinary skill in the art will appreciate that the hardware depicted in FIG 2 may vary for particular implementations, for example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted.

The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein;

Instead, only so much of the configuration generation system 102 as is unique to the present disclosure or necessary for an understanding of the present disclosure is depicted and described;

The remainder of the construction and operation of the configuration generation system 102 may conform to any of the various current implementation and practices known in the art.

FIG 3 is a block diagram of the automation module 112, such as those shown in FIG 2, in which an embodiment of the present disclosure can be implemented.

In FIG 3, the automation module 112 comprises a user interface module 302, a natural language processing and embedding model 304, a threshold manager 306, a large language model engine 308, a vector database module 310, a validation engine, simulation environment and synchronization controller 312, and a security directive generator and hardware programming interface 314.

FIG 3 is explained in conjunction with FIG 1 and FIG 2.

The user interface module 302 is configured for receiving a request to generate a hardware configuration file associated with an industrial domain of the technical installation 106. In one example, the user interface module 302 comprises an HTML5 canvas layered over a WebSocket transport stack that streams keystroke events to the processor 202 in sub-20 millisecond intervals. In yet another example, the user interface module 302 exposes a REST endpoint "/prompt/submit" mapped to the graphical controls so that headless clients can feed configuration intent programmatically. In one example, a plant operator employs a tablet computer connected over a secure wireless link to submit the text "Configure three reciprocating compressors with maintenance mode disabled," which is captured verbatim by the user interface module 302. For example, the request is received from one of the one or more users external to the industrial automation environment 100 via a network. In an alternative non-claimed embodiment, the request is received from one of the one or more client devices 120A-N via the network.

The natural language processing and embedding model 304 is configured for generating an embedding vector, a similarity threshold, and a consolidated context bundle. In one example, the natural language processing and embedding model 304 is a six-billion-parameter transformer fine-tuned on 250 megabytes of historical ladder-logic files and device manuals using a contrastive cosine-margin loss with a learning rate of 1e-5 for fifteen epochs across eight graphical processing units. In yet another example, hyper-parameter values lying within plus or minus twenty percent of the stated ranges yield equivalent semantic clustering fidelity and thus fall within the disclosed scope. In one example, the resulting embedding space achieves a top-1 retrieval accuracy of ninety-two percent when benchmarked against a held-out set of pump and valve configuration snippets. In a preferred embodiment, the generated embedding vector, the similarity threshold, and the consolidated context bundle comprise information about relationships between a set of hardware entities corresponding to each historical configuration file in a set of historical configuration files and a set of parameters associated with the set of historical configuration files. The consolidated context bundle comprises data and control parameters associated with the one or more industrial controllers 108A-N. Further, the natural language processing and embedding model 304 comprises one or more rules associated with one or more relationships between the one or more industrial controllers 108A-N.

To generate the consolidated context bundle, the natural language processing and embedding model 304 is configured to identify the one or more industrial controllers 108A-N based on type of the one or more industrial controllers 108A-N, one or more physical connections between the one or more industrial controllers 108A-N, and a plurality of parameter values associated with the one or more industrial controllers 108A-N and the physical connections. Each of the one or more industrial controllers 108A-N is associated with a unique identifier. Specifically, property values embedded in all industrial controllers are read in order to analyze the configuration file associated with the one or more industrial controllers 108A-N.

For example, if the type of the industrial controller is a specific type of motor controller, then such specific type of motor controller is classified under the controller block "motor". Similarly, if the type of the industrial controller is a physical communication link cable between two industrial controllers 108A-N, then the physical communication link cable is classified under "physical connections" and the like. The unique identifiers associated with such one or more industrial controllers 108A-N help in classifying them into respective one or more controller blocks. Exemplary controller block categories comprise basic block category, variable and statement category, statement category and the like. Further, the natural language processing and embedding model 304 is configured for determining one or more controller properties associated with each of the classified one or more industrial controllers 108A-N. The controller properties are controller domain context, association and relationship with other industrial controllers, controller size, controller identifier, type of industrial controller, and the like.Such controller properties are determined for each of the one or more industrial controllers 108A-N. Such determination using an ontology enables controller elicitation and generalization, and defines property and relationship between the industrial controllers.

When once the controller properties are determined, the natural language processing and embedding model 304 is configured for determining relationship between each of the one or more classified industrial controllers 108A-N based on the determined relationships between each of the one or more classified industrial controllers 108A-N. The natural language processing and embedding model 304 is further configured for generating the consolidated context bundle of the one or more industrial controllers. The users at the client devices 120A-N use the configuration authoring tool 122A-N in order to design or develop hardware configuration files by coding each of these graphical programs.

The threshold manager 306 is configured for analyzing the ontology schema associated with a set of controller blocks. In one example, the threshold manager 306 executes an iterative routine that updates similarity_threshold = base_threshold × (1 + prompt_entropy) once every ten processed prompts. In yet another example, the base_threshold is initialised to the eighty-fifth percentile of pair-wise cosine similarities computed over the preceding one thousand prompts and stabilises within ten iterations. In one example, the arithmetic logic is compiled into WebAssembly and cached inside the threshold manager 306 so that the computation of each new threshold consumes less than five microseconds on a standard industrial edge processor. Specifically, the threshold manager 306 is configured for retrieving data and control parameters associated with each controller block of the set of controller blocks. The data and control parameters are key performance indicators comprising information relating to the set of controller blocks associated with the industrial domain of the technical installation 106, for example, sensor data, actuator data, environment data, network data, any automation data and the like. Further, the threshold manager 306 is configured for comparing the retrieved data and control parameters associated with the set of controller blocks with data and control parameters stored in the consolidated context bundle.

Furthermore, the threshold manager 306 is configured for identifying deviation between the retrieved data and control parameters associated with the set of controller blocks and the data and control parameters stored in the consolidated context bundle. The deviation indicates a difference between the retrieved data and control parameters, and the data and control parameters stored in the consolidated context bundle. Also, the threshold manager 306 is configured for determining type of behavior of the one or more industrial controllers 108A-N corresponding to the identified deviation. The type of behavior comprises normal, abnormal, steady, and require maintenance and the like. Furthermore, the threshold manager 306 is configured for analyzing the behavior of the one or more industrial controllers 108A-N based on the determined type of behavior. In one example, the threshold manager 306 is configured to analyze the set of controller blocks by application of a natural language processing algorithm on a source code of the set of controller blocks.

The large language model engine 308 is configured for modifying the set of controller blocks based on the outcome of analysis of the behavior and the ontology schema. In one example, the large language model engine 308 incorporates a beam-search decoder of width eight combined with a domain-specific grammar checker that prunes any token sequence violating the IEC 61131 ladder syntax. In yet another example, the large language model engine 308 resides within a Docker container staged on the same supervisory node as the vector database module 310, thereby eliminating network latency during generation. In one example, a three-megabyte HWL file covering four hundred device tags is synthesised in less than six seconds by the large language model engine 308. The set of controller blocks is modified based on the analysis of the ontology schema. The modifications comprise any changes such as addition, deletion, update, replacement or revision of one or more variables, code lines, classes, functions, or comments in the set of controller blocks.

In one example, an outcome of analysis of the ontology schema may be a behavior report indicating whether behavior or characteristic of each controller block of the set of controller blocks as defined in the ontology schema is acceptable, improvised, enhanced, optimized or the like. Thus, the set of controller blocks are modified based on the relationships between the set of variables corresponding to each controller block in the set of controller blocks, the set of key performance indicators associated with the set of controller blocks, and the industrial domain of the technical installation 106. Thus, the hardware configuration file is generated based on the relationships between the set of variables corresponding to each controller block in the set of controller blocks, the set of key performance indicators associated with the set of controller blocks, and the industrial domain of the technical installation 106.

In other words, the set of controller blocks are customized based on the ontology schema, to generate the hardware configuration file which is suitable for the one or more industrial controllers 108A-N in the technical installation.

The vector database module 310 is configured for generating a controller library comprising the generated consolidated context bundles, and the plurality of parameter values associated with the one or more industrial controllers 108A-N. In one example, the vector database module 310 employs a hierarchical navigable small-world index with M = 16, efConstruction = 200, and efSearch = 50 to guarantee logarithmic search performance. In yet another example, the index is persisted to a memory-mapped file so that a cold restart of the configuration generation system 102 restores a one-million-vector library in under three seconds. In one example, the vector database module 310 appends a thirty-two-byte checksum to every stored vector so that corruption can be detected before influence on downstream retrieval.

The vector database module 310 is configured for continuously updating the controller library with updated versions of the hardware configuration files. Also, the vector database module 310 is configured for maintaining the controller library in an ontology schema.

The validation engine, simulation environment and synchronization controller 312 is configured to generate a simulation instance for one or more industrial controllers 108A-N of the technical installation. In one example, the simulation instance is realised as a discrete-event model that exposes configurable cycle-time, contact-bounce, and network-latency variables defaulting to ten milliseconds, five milliseconds, and three milliseconds, respectively. In yet another example, users may substitute any simulation kernel that reproduces these timing tolerances without departing from the present disclosure, including hardware-in-the-loop benches driven by fieldbus I/O mirrors. In one example, the validation engine, simulation environment and synchronization controller 312 flags a configuration as unsafe when simulated actuator torques exceed rated limits, thereby preventing live deployment. In one example, the simulation instance is a digital twin of the one or more industrial controllers 108A-N. The validation engine, simulation environment and synchronization controller 312 is configured to simulate execution of the generated hardware configuration file by the one or more industrial controllers 108A-N of the technical installation 106 in a simulation environment by executing the set of controller blocks on the generated simulation instance.

The validation engine, simulation environment and synchronization controller 312 is configured to determine that the generated hardware configuration file is valid, based on a result of simulated execution of the set of controller blocks. Further, the validation engine, simulation environment and synchronization controller 312 is configured for simulating behavior of the set of controller blocks in the simulation environment by executing the set of controller blocks on the generated simulation instance.

The simulation instance emulates an actual technical installation, such as technical installation 106. Further, the simulation instance may be a virtual setup of the actual technical installation 106. Also, the validation engine, simulation environment and synchronization controller 312 is configured for validating the behavior of the set of controller blocks based on results of simulation. The results of simulation may indicate success or failure of the hardware configuration file or the set of controller blocks if deployed in the technical installation 106.

The security directive generator and hardware programming interface 314 is configured for deploying the hardware configuration file in real-time onto the one or more industrial controllers 108A-N installed in the technical installation 106 based on the validation. In one example, the security directive generator and hardware programming interface 314 maps high-level role descriptors such as "FullAccess", "ReadOnly", and "OperatorOnly" to YAML tags !FA, !RO, and !OP, each followed by a colon-separated list of permitted create-read-update-delete operations. In yet another example, a generated HWL file containing the tag !OP:pump_start|pump_stop is automatically signed with an RSA-4096 private key before transfer to the target programmable logic controller. In one example, co-location of the hardware programming interface inside the supervisory node reduces commissioning latency from hours to seconds by removing the requirement for offline laptops and manual editor sessions. Advantageously, the generated hardware configuration file is only deployed onto the one or more industrial controllers 108A-N after the determination that the generated hardware configuration file is valid.

In one example, a factory operator types a 500-line natural-language specification of a bottling line into the user interface module 302, and within seven seconds the processor 202 orchestrates generation, simulation and validation, eventually delivering a ready-to-deploy HWL file. In yet another example, the natural language processing and embedding model 304 retrieves archived valve-control templates whose cosine similarity exceeds the adaptive threshold produced by the threshold manager 306, ensuring high-fidelity grounding before synthesis. In one example, the validation engine, simulation environment and synchronization controller 312 executes a 100-cycle stress test that confirms the generated ladder-logic meets a sub-15 millisecond scan-time requirement across all simulated PLCs. In yet another example, the security directive generator and hardware programming interface 314 streams the signed configuration over a deterministic industrial Ethernet segment to three redundant controllers, achieving full deployment without production downtime.

When executed by the automation module 112, the processor 202 causes the automated generation and deployment of a hardware configuration file. The present disclosure is further described hereinafter with reference to illustrated embodiments shown in the accompanying drawings, in which:
The user interface module 302 is configured to cause the processor 202 to receive, from a user typing into a visible text-entry field, a natural language prompt specifying a hardware configuration intent in everyday English. Examples of the user interface module 302 include, but are not limited to, a browser-based dashboard built with React, a touchscreen human-machine interface running Qt, and a mobile tablet application using Flutter. The hardware configuration intent is a high-level statement of desired device behaviour that drives the downstream file-generation process by informing all retrieval and synthesis stages. Examples of the hardware configuration intent include, but are not limited to, a plurality of pump-redundancy requirements, a plurality of network-security policies, and a plurality of sensor-calibration parameters. The user interface module 302 is a combination of graphical controls and backend logic that captures free-form text and relays the text for downstream processing. A natural language prompt is an unstructured string of unicode characters whose average length ranges from 10 to 500 words. An example prompt is "Configure two redundant pumps with automatic fail-over and email alerts." The aforementioned example illustrates how a non-technical supervisor launches the full natural language prompt hardware configuration intent-driven hardware-configuration generation pipeline without writing code, thereby shortening hand-off time compared with legacy ladder-logic editors.

The natural language processing and embedding model 304 is configured to cause the processor 202 to apply tokenization and sentence parsing to the natural language prompt before a embedding vector is produced. Tokenization is performed by segmenting the natural language prompt into a plurality of tokens, each token being a contiguous sequence of characters representing either a word, a punctuation symbol, or a numerical value. Sentence parsing is performed by constructing dependency trees that label parts of speech and grammatical relations for every token. The natural language prompt is tokenized and parsed by application of an algorithm such as at least one of a Byte-Pair-Encoding algorithm, a WordPiece algorithm, or a spaCy dependency-parsing algorithm on the prompt text. The algorithm is configured to output token identifiers and syntactic relations used in subsequent semantic encoding. In one embodiment, the natural language processing and embedding model 304 applies the spaCy dependency-parsing algorithm to parse the natural language prompt. The spaCy dependency-parsing algorithm utilises a pre-trained convolutional neural network model that was trained on the Universal Dependencies English Web Treebank; an input sentence such as "Open valve V-101" yields an output dependency tree in which "Open" is the root verb and "valve" is its direct object, thereby providing syntactic structure that accelerates later semantic encoding.

The natural language processing and embedding model 304 is further configured to cause the processor 202 to process the tokenized and parsed natural language prompt for semantic encoding. The natural language processing and embedding model 304 is a machine-learning encoder network that converts textual or structural data into a continuous vector space so that semantic similarity can be quantitatively measured throughout the pipeline. Examples of the natural language processing and embedding model 304 include, but are not limited to, Sentence-Bidirectional Encoder Representations from Transformers, Ada-002 encoder, and Cohere multilingual embedder. Transmission is achieved over an inter-process message bus; for example, a Remote Procedure Call conveys a JavaScript Object Notation payload containing the ordered token list and parse information to a microservice hosting the natural language processing and embedding model 304.

The natural language processing and embedding model 304 is configured to cause the processor 202 to generate the embedding vector representing a semantic meaning of the natural language prompt. The embedding vector is a fixed-length numeric array that serves as the quantitative semantic representation enabling rapid similarity search against a plurality of historical hardware configuration files. Examples of the embedding vector include, but are not limited to, a 768-dimension NumPy array, a 512-dimension PyTorch tensor, and a 1024-dimension Open Neural Network Exchange float vector. The embedding vector is a dense array of 768 floating-point values measured in dimensionless units that capture contextual semantics. The natural language processing and embedding model 304 is configured to convert the natural language prompt by applying a transformer-based text-encoding network that is trained on a plurality of technical manuals and configuration scripts; the network accepts token identifiers as input and outputs the embedding vector as a NumPy array. The transformer-based text-encoding network is trained with a contrastive-loss objective on 250,000 sentence pairs so that semantically similar sentences map to nearby points in vector space; an input natural language prompt "Enable redundant pump switchover" yields an output vector that is subsequently compared with a plurality of embedding vectors of the plurality of historical hardware configuration files, and the resulting similarity score contributes to accurate context retrieval.

The threshold manager 306 is configured to cause the processor 202 to determine an adaptive similarity threshold for selection of a relevant configuration context set, the determination being based on detected variability of the natural language prompt. Variability is quantified by calculating entropy across token frequencies and by measuring natural language prompt length. The adaptive similarity threshold is determined by application of an algorithm such as at least one of a Z-score-normalisation algorithm, a K-means-clustering algorithm, or a percentile-based dynamic-thresholding algorithm on statistical features of the natural language prompt. The algorithm is configured to output a floating-point threshold between 0 and 1 that governs retrieval strictness. In one embodiment, the threshold manager 306 applies the percentile-based dynamic-thresholding algorithm to determine the adaptive similarity threshold, thereby enabling flexible recall when natural language prompts are highly specific and tighter precision when natural language prompts are vague.

The threshold manager 306 is further configured to cause the processor 202 to operate a parameter adjuster to adjust similarity search parameters within the vector database module 310 in accordance with the adaptive similarity threshold. The similarity search parameters include a nearest-neighbour value k and a distance-metric type. In one example, the adaptive similarity threshold is below 0.35. In such a case, the parameter adjuster is configured to increase k to 25 and to use cosine distance to broaden context coverage. In another example, the adaptive similarity threshold is above 0.75. In such a case, the parameter adjuster is configured to lower k to 5 and to employ Euclidean distance to focus retrieval on highly relevant records.

The processor 202 is configured to select the relevant configuration context set from the vector database module 310 by applying a similarity search between the embedding vector and a plurality of embedding vectors corresponding to a plurality of historical hardware configuration files. The relevant configuration context set is a curated subset of historical configuration fragments that provides domain-specific grounding information to the large language model engine 308. Examples of the relevant configuration context set include, but are not limited to, previously validated pump-control YAML blocks, archived Proportional-Integral-Derivative loop parameters, and legacy safety-interlock scripts. The similarity search is a metric-based retrieval operation that connects new user requests to prior knowledge and enhances the technical accuracy of generated files. Examples of a similarity search include, but are not limited to, cosine-distance nearest-neighbour lookup, dot-product approximate-nearest-neighbour retrieval, and Euclidean-distance hierarchical graph traversal. The embedding vector is compared against two or more of the plurality of embedding vectors of the plurality of historical hardware configuration files using the adjusted similarity search parameters. The selection is performed by application of an algorithm such as at least one of an Approximate-Nearest-Neighbour algorithm, a Hierarchical Navigable Small World algorithm, or a Scalable Nearest Neighbour algorithm on the vector database. The algorithm is configured to output an ordered list of identifiers for historical configuration fragments that exceed the adaptive similarity threshold. In one embodiment, the processor 202 applies the Hierarchical Navigable Small World algorithm to select the relevant configuration context set, thereby grounding subsequent generation in proven best practices. A real-world advantage of this vector-embedding context retrieval is observed when a wastewater-treatment plant reuses prior validated pump-and-valve settings, reducing commissioning time by 60 percent compared with manual library searches.

The processor 202 is further configured to control execution of the large language model engine 308 by transmitting, over a secure Remote Procedure Call channel, the consolidated context bundle comprising the natural language prompt and the relevant configuration context set to the large language model engine 308, and by receiving from the large language model engine 308 a candidate hardware configuration file. The large language model engine 308 is a transformer-based generative neural network that synthesises structured configuration code in response to context-rich natural language prompts, thus replacing manual script writing with automated expertise. Examples of the large language model engine 308 include, but are not limited to, Generative Pre-trained Transformer-4, Pathways Language Model-2, and Large Language Model Meta-Al-2 fine-tuned on industrial corpora. The consolidated context bundle is a JavaScript Object Notation document averaging 30 kilobytes in size that concatenates the raw natural language prompt with between 5 and 25 retrieved configuration fragments. In one example. the large language model engine 308 applies a transformer decoder with at least six billion parameters fine-tuned on 120,000 industrial configuration files, generating the candidate hardware configuration file as structured YAML text. For example, in a food-processing facility the large language model engine 308 outputs a candidate hardware configuration file that enables Clean-in-Place sequences for stainless-steel tanks, saving hours of manual scripting.

The validation engine, simulation environment and synchronization controller 312 is configured to cause the processor 202 to determine validity of the candidate hardware configuration file by applying schema validation and logic consistency checks. The validation engine, simulation environment and synchronization controller 312 is a rule-driven analysis component that safeguards deployment quality by verifying that the candidate hardware configuration file adheres to both syntactic schemas and logical-coherence constraints. Examples of the validation engine, simulation environment and synchronization controller 312 include, but are not limited to, a JavaScript Object Notation-Schema validator written in Rust, an Open Platform Communications Unified Architecture rule checker, and a Prolog-based logic tester. Schema validation is performed by matching the candidate hardware configuration file against a JavaScript Object Notation-Schema definition containing field types, mandatory sections, and regular-expression-based value constraints. Logic consistency checks verify cross-reference integrity such as device identifiers and network addresses. The candidate hardware configuration file is validated by application of an algorithm such as at least one of a JavaScript Object Notation-Schema validation algorithm, a static symbolic-execution algorithm, or a rule-based expert-system algorithm on the candidate hardware configuration file content. The algorithm is configured to output a pass or fail status and a list of violations. In one embodiment, the validation engine, simulation environment and synchronization controller 312 applies the JavaScript Object Notation-Schema validation algorithm to determine validity.

The validation engine, simulation environment and synchronization controller 312 is further configured to cause the processor 202 to output validity status information based on results of the schema validation and the logic consistency checks via an output device. The validity status information is a textual and colour-coded signal displayed in the user interface module 302 and additionally emitted as a WebSocket message whose payload contains a Boolean pass flag and an array of error descriptors.

The security directive generator and hardware programming interface 314 is configured to cause the processor 202 to apply an access protection level to the candidate hardware configuration file by generating security directives controlling modification rights. The modification rights are granular-permission flags that regulate which user categories can alter designated sections of the candidate hardware configuration file, thereby enforcing operational security and regulatory compliance. Examples of the modification rights include, but are not limited to, engineer-only write access to safety routines, operator-level changes to alarm thresholds, and auditor-exclusive read access for compliance review. An access protection level is a symbolic label chosen from a set including FullAccess, ReadOnly, and OperatorOnly, each label being embedded as a tag in the candidate hardware configuration file YAML file. The security directives are generated by application of an algorithm such as at least one of a Role-Based-Access-Control policy engine, an Attribute-Based-Access-Control policy engine, or a National Institute of Standards and Technology Role-Based-Access-Control algorithm on user role metadata. The algorithm is configured to map user roles to permissible candidate hardware configuration file sections. In one embodiment, the security directive generator and hardware programming interface 314 applies the Role-Based-Access-Control policy engine to embed FullAccess for senior automation engineers while assigning ReadOnly to operators.

The security directive generator and hardware programming interface 314 is further configured to cause the processor 202 to embed the generated security directives in the candidate hardware configuration file, rewriting the candidate hardware configuration file headers so that the access protection level is enforced during downstream deployment.

The validation engine, simulation environment and synchronization controller 312 is configured to cause the processor 202 to send, via a network socket, the candidate hardware configuration file to a simulation environment for validation. The simulation environment is a software platform that emulates electrical inputs, electrical outputs, and cycle times of at least one industrial controller 108A-N. The industrial controller 108A-N is a programmable automation device that executes a generated hardware configuration file to influence physical machinery, thereby closing the loop between digital generation and real-world operation.

The validation engine, simulation environment and synchronization controller 312 is further configured to cause the processor 202 to detect operational errors by executing the candidate hardware configuration file on a digital twin of the industrial controller 108A-N. The digital twin is a high-fidelity software replica of physical automation hardware that enables safe, cost-free experimentation and error detection prior to field deployment. Examples of the digital twin include, but are not limited to, a virtualised Totally Integrated Automation Portal instance, an Ansys-based fluid-process simulator, and a Unity-driven robotic-cell emulation. A plurality of operational errors are detected by comparing expected signal transitions defined in the candidate hardware configuration file to simulated sensor feedback within millisecond-level time steps. Detection is performed by application of an algorithm such as at least one of a discrete-event-simulation algorithm, a finite-state-machine-checking algorithm, or a temporal-logic-monitoring algorithm on simulated input-output traces. The algorithm is configured to flag deviations such as race conditions or address conflicts. In one embodiment, the validation engine, simulation environment and synchronization controller 312 applies the discrete-event-simulation algorithm to detect operational errors. A real-world advantage of the integrated virtual-simulation validation loop is visible when a pharmaceutical plant identifies valve interlocks virtually, thereby preventing costly fluid contamination during commissioning.

The validation engine, simulation environment and synchronization controller 312 is configured to cause the processor 202 to modify the candidate hardware configuration file in response to any detected operational error by injecting recommended corrections into the sections that produced faults. For example, if a clash between two motor-starter addresses is detected, the validation engine, simulation environment and synchronization controller 312 inserts an incremented address and annotates the change for auditability.

The validation engine, simulation environment and synchronization controller 312 is configured to cause the processor 202 to synchronize simulation progress indicators between the simulation environment and the user interface module 302 so that a real-time validation status is displayed. A plurality of simulation progress indicators are quantitative metrics or visual cues that represent the current execution state of the virtual test, enabling users to monitor validation in real time. Examples of simulation progress indicators include, but are not limited to, percentage-completion bars, live error counters, and step-wise state diagrams. A real-time validation status is an up-to-the-second assessment result that informs stakeholders whether the candidate hardware configuration file currently passes or fails simulated checks. Examples of real-time validation status include, but are not limited to, a green "Pass" badge, a yellow "Warning" indicator, and a red "Fail" alert. Synchronization is achieved by pushing percentage-complete events and error counts over a Message Queuing Telemetry Transport channel every 250 milliseconds.

The validation engine, simulation environment and synchronization controller 312 is further configured to cause the processor 202 to operate the output device to provide the synchronized validation status to the user interface module 302, where a progress bar and a pass-or-fail icon reflect the current simulation environment state.

The display module and feedback interface 210 is configured to cause the processor 202 to display a simulation report and guidance messages referencing the relevant configuration context set, enabling a user to understand both the origin of recommended parameters and any changes applied during simulation environment. The guidance messages are human-readable advisory statements that assist users in assessing simulation environment outcomes and deciding on next steps for configuration adjustments. Examples of guidance messages include, but are not limited to, warnings about missing safety interlocks, suggestions to reorder network interfaces, and tips for optimising scan times. A simulation report is a HyperText Markup Language document averaging 100 kilobytes in size and includes tables of cycle times and security warnings.

The feedback interface in the display module and feedback interface 210 is configured to cause the processor 202 to receive user feedback in response to a simulation report, such as a textual approval note or an instruction to regenerate the candidate hardware configuration file with different safety interlocks. The user feedback is serialised as JavaScript Object Notation and routed back to the processor 202 for further action.

The security directive generator and hardware programming interface 314 is configured to cause the processor 202 to deploy the candidate hardware configuration file over Ethernet/IP or Process Field Network to at least one industrial controller 108A-N, thereby physically altering operation of the at least one industrial controller 108A-N in accordance with the directives contained in the candidate hardware configuration file. For instance, in a beverage-bottling line, the deployment activates new pump timings within seconds, replacing a manual upload that traditionally required a laptop and proprietary software.

The network interface and feedback loop module 212 is configured to cause the processor 202 to receive a deployment status from the at least one industrial controller 108A-N, the deployment status being a byte-encoded message indicating success, warning, or fault. The network interface and feedback loop module 212 is an autonomic-control component that channels deployment outcomes back into a hardware configuration file generation pipeline, thereby enabling self-correcting automation workflows. Examples of the network interface and feedback loop module 212 include, but are not limited to, an event listener, an Internet of Things Hub message processor, and a Message Queuing Telemetry Transport-based fault handler. The network interface and feedback loop module 212 is further configured to transmit a failure context to the processor 202 for iterative refinement via the large language model engine 308 when a fault is detected. A failure context is a structured diagnostic payload that encapsulates error codes and environmental metadata so that subsequent artificial-intelligence iterations can precisely target and remedy deployment faults. Examples of a failure context include, but are not limited to, a JavaScript Object Notation object indicating an input-output address clash, a Protocol Buffers message summarising sensor-timeout statistics, and a comma-separated-values log highlighting cyclic-execution overruns. Iterative refinement is a closed-loop correction cycle that incrementally improves candidate hardware configuration file quality by feeding real-time feedback back into a generative subsystem. Examples of iterative refinement include, but are not limited to, automatic parameter tuning after simulation environment errors, natural language prompt augmentation after on-device alarms, and security-policy tightening after audit warnings. This adaptive error-driven feedback loop automatically triggers a new relevant configuration context set retrieval and candidate hardware configuration file generation cycle, cutting mean-time-to-repair from hours to minutes in a mining-conveyor application where belt-speed mismatches are corrected on the fly.

The historical hardware configuration store 118 is configured to cause the processor 202 to receive and archive the candidate hardware configuration file after successful deployment. The historical hardware configuration store 118 is a document-oriented database that retains every validated candidate hardware configuration file together with metadata such as deployment timestamp and plant identifier.

The vector database module 310 is configured to cause the processor 202 to generate a new embedding vector for the archived candidate hardware configuration file, thereby augmenting contextual data within the vector database module 310 for future similarity searches. The vector database module 310 is an indexing utility that transforms newly deployed candidate hardware configuration files into vector representations so that the vector database module 310 continuously evolves with each successful rollout. Examples of the vector database module 310 include, but are not limited to, a background Celery worker that calls the embedding application programming interface, an Apache Spark job that batches nightly vector updates, and a Remote Procedure Call microservice performing on-demand encoding. The new embedding vector is produced using the same natural language processing and embedding model 304 that processed the original natural language prompt, thereby ensuring vector-space consistency. A real-world advantage of this self-updating historical hardware configuration store 118 is revealed when a smart-building management system progressively accelerates future Heating, Ventilation, and Air Conditioning configuration tasks by leveraging every prior deployment as fresh training context.

In one example, the security directive generator and hardware programming interface 314 is further configured to ensure that the security directives embedded within the candidate hardware configuration file are recognized and enforced by both the industrial controller firmware and associated configuration management applications at deployment and during subsequent modification attempts. Upon deployment, the industrial controller parses the embedded access protection tags-such as !FA, !RO, and !OP-using an onboard policy enforcement module that maps these tags to authenticated user credentials, which are provisioned through a cryptographically signed identity token exchanged during user login. Any attempt to modify, update, or overwrite configuration parameters on the deployed industrial controller requires the user interface, whether local or remote, to initiate an authorization check via a secure inter-process call to the policy enforcement module. If the logged-in user's role and digital certificate match the permission set defined by the security directive embedded in the candidate hardware configuration file, the requested change is permitted and a corresponding audit event is logged both locally on the device and remotely in the historical hardware configuration store 118. Conversely, if the user's credentials do not meet the required access level, the modification request is automatically rejected, and a denial-of-access event, including the attempted action and user identifier, is recorded in the audit trails. This multi-layer enforcement approach ensures that hardware configuration files generated and deployed through the configuration generation system 102 remain immutable or restricted in accordance with the embedded security directives, thereby providing end-to-end governance over modification rights throughout the lifecycle of the industrial automation environment.

In one example, the security-directive generator and hardware programming interface 314 instantiates a pluggable "vendor adapter" layer that normalises deployment across heterogeneous PLC families by converting the LLM-produced Hardware Work List (HWL) into IEC 61131-3 PLCopen XML, then piping that XML through adapter micro-services, each compiled as a 5 MB Go binary that speaks the corresponding proprietary download protocol. The adapters are invoked by the network interface and feedback loop module 212 over a gRPC stream that transmits a "DeployRequest" carrying the XML, a SHA-256 checksum, and a target-controller UUID. Each adapter internally runs an open-source protocol stack augmented with a compiler plug-in that maps XML tag names to device data-table addresses obtained from a controller-introspection handshake. Upon successful transfer, the adapter issues a vendor-specific run-mode transition (e.g., CIP service 0x01 "Run" or S7 job 0x29 "Start") and returns a "DeploymentAck" containing firmware version, scan-time baseline, and an RSA-4096 signature that is persisted in the historical hardware configuration store 118, thereby enabling a single declarative interface to deploy to "at least one industrial controller" of any make without manual tooling.

In one example, the validation engine, simulation environment and synchronization controller 312 auto-synthesises a faithful digital twin for any target controller by parsing the same PLCopen XML used for deployment to construct an intermediate representation (IR) in Static Single Assignment form, after which an LLVM back-end compiles the IR into byte-code that executes inside a cycle-accurate soft-PLC kernel. The cycle-accurate soft-PLC kernel models scan-cycle timing, hardware interrupts, watchdog behaviour, and vendor instruction sets through dynamically loaded plug-ins, each dispatched via a vtable keyed by the opcode IDs extracted from the XML. Physical I/O modules are emulated by a co-simulation bus that links the soft-PLC kernel to a Plant Model Engine running Modelica or FMU artefacts describing pumps, valves, or conveyors. Prior to simulation, the controller-specific plug-in library is fetched from a registry that stores open-sourced opcode semantics packages for a plurality of devices; new device types are added by supplying a JSON manifest that declares cycle-time, memory layout, and opcode-to-function mappings-requiring no modification of the core kernel. During execution, every contact, coil, and structured-text assignment updates a trace buffer that is sampled at 1 kHz and fed to a temporal-logic monitor that flags race conditions, arithmetic overflows, or safety-signature mismatches.

In one example, the security-directive generator and hardware programming interface 314 embeds a cross-vendor, run-time-enforced access-control scheme by inserting a lightweight "RBAC-FB" (Role-Based-Access-Control Function Block) into the final PLCopen XML prior to deployment. RBAC-FB is delivered as IEC 61131 structured-text source plus a 4 KB pre-compiled binary blob that executes inside the user task of the target PLC and exposes an SPI-style hook that intercepts every configuration-write attempt. When the YAML tags !FA, !RO, or !OP are encountered during file-synthesis, the security-directive generator and hardware programming interface 314 serialises them into an XML annotation that the RBAC-FB parses at boot, constructing an in-memory ACL table that maps object names to permission bitmasks. User credentials are supplied to the PLC by the network interface and feedback loop module 212 through an OPC UA "Logon" method carrying an X.509 certificate; RBAC-FB validates the certificate against an embedded Elliptic-Curve P-256 public key provisioned during manufacturing, then compares the role field in the certificate's SubjectAltName to the ACL table. Any disallowed write triggers RBAC-FB to raise a vendor-neutral diagnostic code (e.g., 0xBAD_ACL) that is propagated back to the configuration generation system 102, logged in the historical hardware configuration store 118, and displayed in real time on the user interface module 302.

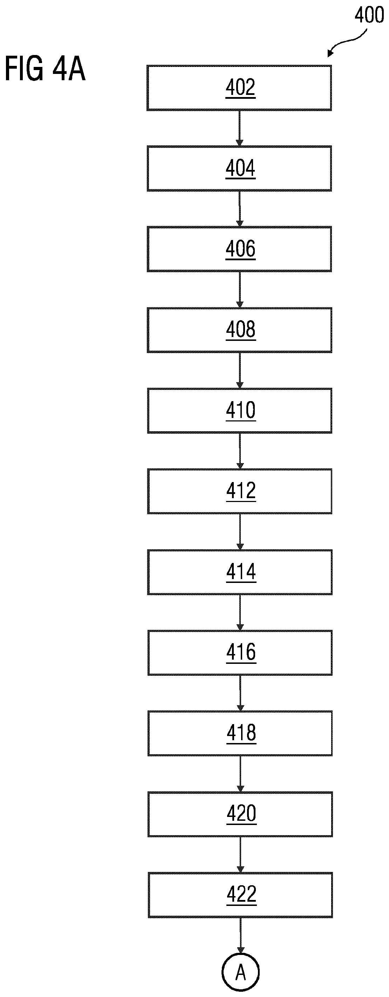

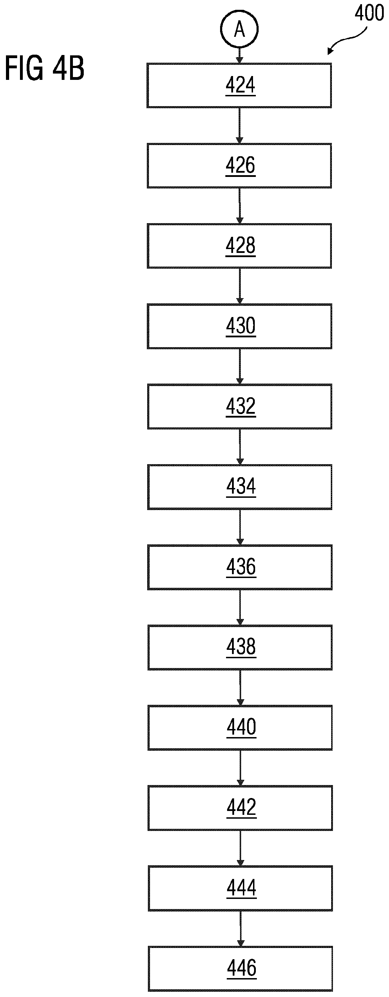

FIG 4A-B is a process flowchart illustrating an exemplary method of automated generation and deployment of a hardware configuration file, according to an embodiment of the present invention. The method begins at step 402. At step 402, a natural language prompt specifying a hardware configuration intent is received at the user interface module from a user.

At step 404, the tokenization and sentence parsing are applied to the natural language prompt before the embedding vector is generated. At step 406, the natural language prompt is submitted to the embedding model after the tokenization and sentence parsing.

At step 408, the embedding vector representing the natural language prompt is generated using the embedding model. At step 410, an adaptive similarity threshold is determined for selection of a relevant configuration context set based on detected variability of the natural language prompt.

At step 412, the similarity search parameters are adjusted in accordance with the adaptive similarity threshold. At step 414, a relevant configuration context set is selected from the vector database by applying a similarity search between the embedding vector and a plurality of embedding vectors corresponding to a plurality of historical hardware configuration files using a processor.

At step 416, execution of a large language model is controlled by transmitting a consolidated context bundle comprising the natural language prompt and the relevant configuration context set to the large language model and generating a candidate hardware configuration file.

At step 418, the validity of the candidate hardware configuration file is determined by applying schema validation and logic consistency checks. At step 420, a validity status information is output based on the results of the schema validation and logic consistency checks.

At step 422, an access protection level is applied to the candidate hardware configuration file by generating security directives controlling modification rights. At step 424, the candidate hardware configuration file is updated with the security directives.

At step 426, execution of a simulation environment is controlled by transmitting the candidate hardware configuration file to a digital twin of at least one industrial controller.

At step 428, operational errors are detected by virtualized execution. At step 430, the candidate hardware configuration file is modified in response to a detected operational error.

At step 432, the simulation progress indicators are synchronized between the simulation environment and the user interface module to display real-time validation status. At step 434, a synchronized validation status is output to the user interface module.

At step 436, a simulation report and guidance messages referencing the relevant configuration context set are displayed to a user on the user interface module. At step 438, user feedback is received in response to the simulation report.

At step 440, deployment of the candidate hardware configuration file to at least one industrial controller is controlled thereby physically altering operation of the at least one industrial controller in accordance with the candidate hardware configuration file.

At step 442, a deployment status is received from the at least one industrial controller. At step 444, if a failure is detected, a failure context is transmitted to the processor to control execution of the large language model with an updated consolidated context bundle for iterative refinement of the candidate hardware configuration file.

At step 446, the candidate hardware configuration file is transmitted to a historical hardware configuration store after deployment. At step 448, a new embedding vector is generated for the candidate hardware configuration file thereby augmenting contextual data within the vector database for future similarity searches.

It is clarified that the present invention expressly combines both advanced natural language processing and domain-specific retrieval with adaptive language model synthesis to address deficiencies found in legacy, rigid configuration systems. The hybrid pipeline leveraging dynamic embedding-based retrieval and large language model (LLM)-driven synthesis is designed to ensure both contextual grounding in validated historical configurations and flexible adaptation to novel deployment intents, thereby substantially outperforming either rule-based or purely generative approaches, particularly in environments susceptible to data drift, system heterogeneity, or evolving process demands. However, the invention acknowledges that, in niche or less complex use cases, single-stage approaches (such as static template matching or direct manual coding) may be sufficient; nevertheless, the disclosed hybrid pipeline is presented as the general and preferred embodiment for robust, scalable, and user-friendly field deployment.

Regarding controller and configuration independence, while the system dynamically adapts tokenization, context retrieval, simulation, and security directive application to any supported industrial controller or configuration domain, certain processes (such as digital twin modeling or security policy embedding) necessarily remain context- and hardware-dependent to ensure valid operation and enforceable access control. The claimed "substantial independence" refers to the system's automated, seamless management of these module-specific adaptations, thereby minimizing manual intervention and potential configuration errors, and unifying deployment and security assurance across a variety of industrial environments.

The present invention can be implemented as a system comprising software, firmware, and/or hardware modules suitable for use within one or more client devices (120A-N), servers, controllers (108A-N), or distributed automation platforms. For the purpose of this disclosure, the claimed system encompasses any apparatus, architecture, or arrangement that processes, stores, communicates, propagates, or transmits machine-readable configuration data (such as XML, HWL, YAML, or JSON) across interoperable modules including user interface module (302), natural language processing and embedding model (304), processor (202), large language model engine (308), vector database (310), simulation/validation environment (312), security directive generator and hardware programming interface (314), and other control logic. System elements may comprise software microservices, distributed orchestration environments, or hardware-based accelerators including but not limited to CPUs, GPUs, FPGAs, microcontrollers, networking hardware, persistent storage units, and industrial interface circuits. Both control logic and processing elements for implementing each functional aspect of the technology can be centralized, distributed, or hybridized as known to those skilled in the art.

While the present invention has been described in detail with reference to certain embodiments and examples, it should be appreciated that the invention is not limited to those embodiments. In view of the present disclosure, numerous modifications, extensions, and variations will present themselves to those skilled in the art without departing from the scope of the various embodiments of the claimed invention as described herein. The scope of the present invention is thus defined by the following claims and not by the foregoing description, and all changes, modifications, and equivalents that fall within the meaning and range of equivalency of the claims are to be regarded as included within their scope. Where claims are presented in method form, it is understood that all advantageous system, apparatus, and controller implementations described herein are also to be considered within the scope of equivalent system claims.

The disclosed configuration generation system 102 delivers pronounced benefits over conventional PLC, SCADA and engineering-suite workflows. By allowing the natural-language-processing and embedding model 304 to act as a contextual-data-fusion engine-automatically reconciling heterogeneous design intents, legacy controller fragments and live plant telemetry- and by enabling the threshold manager 306 to operate as an adaptive hysteresis/similarity-band processor that continuously tunes retrieval thresholds, token-windows and persistence criteria in light of both real-time and historical deployment context, the invention sharply cuts engineering overload and alarm-style "configuration fatigue." Only those directives that survive this context-aware filtering are forwarded to the large language model engine 308, where a schema-conversion and plug-in manager normalises device-specific dialects and inserts hot-pluggable domain adapters. As a result, the final hardware-configuration files passed to the security-directive generator and hardware-programming interface 314 are logically consistent, safety-compliant and fully traceable. The architecture further supports seamless on-boarding of new device classes or data sources through plug-ins, and it closes the learning loop by harvesting operator feedback, simulation traces and regulatory-audit results. A version-stamped, tamper-evident historical hardware-configuration store and vector database 310 archives every threshold adjustment, LLM revision and deployment action, making the solution particularly suitable for IloT and other mission-critical automation domains where configuration reliability, auditability and continuous optimisation are paramount.

Unless expressly stated to the contrary, every quantitative value, percentage, latency, distance, threshold or similar parameter recited in the present disclosure-including, by way of example only, phrases such as "768-dimension vector," "sub-15 ms scan-time," or "k = 25 neighbours"-is provided solely as a non-limiting illustrative aid to enable persons of ordinary skill in the art to make and use the disclosed subject matter. Each such parameter is therefore to be understood as encompassing: (i) approximate or rounded values; (ii) values that vary by manufacturing tolerance, design choice, network condition or environmental factor; (iii) any operative sub-ranges, super-ranges or combinations thereof; and (iv) any alternative, functionally equivalent values that achieve substantially the same technical effect. Accordingly, unless a specific numeric limitation is affirmatively recited in an appended claim, no individual value, ratio, percentage, range endpoint or protocol code mentioned herein should be construed as an essential or exclusive limitation of the invention, and all modifications, substitutions and equivalents falling within the scope and spirit of the claims are expressly contemplated.

## Claims

1. A computer-implemented method for automated generation and deployment of a hardware configuration file, the method comprising:
receiving at a user interface module (302) a natural language prompt specifying a hardware configuration intent from a user;
generating using a natural language processing and embedding model (304) a embedding vector representing the natural language prompt;
selecting using a processor (202) a relevant configuration context set from a vector database (310) by applying a similarity search between the embedding vector and a plurality of embedding vectors corresponding to a plurality of historical hardware configuration files;
controlling execution of a large language model by transmitting a consolidated context bundle comprising the natural language prompt and the relevant configuration context set to the large language model and generating a candidate hardware configuration file;
and controlling deployment of the candidate hardware configuration file to at least one industrial controller (108A-N) thereby physically altering operation of the at least one industrial controller (108A-N) in accordance with the candidate hardware configuration file.

2. The method in accordance with claim 1 further comprising:
applying tokenization and sentence parsing to the natural language prompt before generating the embedding vector.

3. The method according to any of the preceding claims, further comprising:
determining validity of the candidate hardware configuration file by applying schema validation and logic consistency checks in a validation engine, simulation environment, and synchronization controller (312);
and outputting validity status information based on results of the schema validation and logic consistency checks.

4. The method according to any of the preceding claims, further comprising:
controlling execution of the validation engine, simulation environment, and synchronization controller (312) by transmitting the candidate hardware configuration file to a digital twin of the at least one industrial controller (108A-N);
detecting operational errors by virtualized execution;
and modifying the candidate hardware configuration file in response to a detected operational error.

5. The method according to any of the preceding claims, further comprising:
receiving a deployment status from the at least one industrial controller (108A-N); and
if a failure is detected, transmitting a failure context to the processor (202) to control execution of the large language model with an updated consolidated context bundle for iterative refinement of the candidate hardware configuration file.

6. The method according to any of the preceding claims, further comprising:
transmitting the candidate hardware configuration file to a historical hardware configuration store (118) after deployment; and
generating a new embedding vector for the candidate hardware configuration file thereby augmenting contextual data within the vector database (310) for future similarity searches.

7. The method according to any of the preceding claims, further comprising:
displaying a simulation report and guidance messages referencing the relevant configuration context set to a user on the user interface module (302);
and receiving user feedback in response to the simulation report.

8. The method according to any of the preceding claims, further comprising:
applying an access protection level to the candidate hardware configuration file by generating security directives controlling modification rights;
and updating the candidate hardware configuration file with the security directives.

9. The method according to any of the preceding claims, further comprising:
determining an adaptive similarity threshold for selection of the relevant configuration context set based on detected variability of the natural language prompt;
and adjusting the similarity search parameters in accordance with the adaptive similarity threshold.

10. The method according to any of the preceding claims, further comprising:
synchronizing simulation progress indicators between the simulation environment and the user interface module (302) to display real-time validation status;
and outputting the synchronized validation status to the user interface module (302).

11. A system for automated generation and deployment of a hardware configuration file, the system comprising:
a user interface module (302) configured to receive a natural language prompt specifying a hardware configuration intent from a user;
a natural language processing and embedding model (304) configured to generate an embedding vector representing the natural language prompt;
a processor (202) configured to select a relevant configuration context set from a vector database (310) by applying a similarity search between the embedding vector and a plurality of embedding vectors corresponding to a plurality of historical hardware configuration files;
a large language model engine (308) configured to receive a consolidated context bundle comprising the natural language prompt and the relevant configuration context set and generate a candidate hardware configuration file;
and a hardware programming interface (314) configured to deploy the candidate hardware configuration file to at least one industrial controller (108A-N) thereby physically altering operation of the at least one industrial controller (108A-N) in accordance with the candidate hardware configuration file.

12. The system in accordance with claim 11 further comprising:
the natural language processing and embedding model (304) further configured to apply tokenization and sentence parsing to the natural language prompt before the natural language processing and embedding model (304) generates the embedding vector;
and a sequencing mechanism (within 304) configured to deliver the tokenized and parsed prompt to the natural language processing and embedding model (304).

13. The system according to any of the preceding system-based claims, further comprising:
a validation engine configured to determine validity of the candidate hardware configuration file by applying schema validation and logic consistency checks;
and an output device (210, part of the display module and feedback interface) configured to provide a validity status based on results of validity determination.

14. The system according to any of the preceding system-based claims, further comprising:
a simulation environment configured to receive the candidate hardware configuration file;
detect operational errors by simulating execution on a digital twin of the at least one industrial controller (108A-N);
and output an updated hardware configuration file in response to a detected operational error.

15. The system according to any of the preceding system-based claims, further comprising:
a feedback loop module (212) configured to receive a deployment status from the at least one industrial controller (108A-N);
and in response to failure detection, to transmit a failure context to the processor (202) for iterative refinement of the candidate hardware configuration file via the large language model engine (308).
